# FASCICULE DE BREVET EUROPEEN

(11) **EP 0 557 216 B1**
(45) Date de publication et mention de la délivrance du brevet: **13.11.1996**
(21) Numéro de dépôt: 93420070.0
(22) Date de dépôt: 16.02.1993
(51) Int. Cl.: G01L 9/00

(54) **Micro-capteur de pression**
Druckmikrosensor
Pressure microsensor

(30) Priorité: 20.02.1992 FR 9202189
(43) Date de publication de la demande: 25.08.1993
(73) Titulaire: SEXTANT AVIONIQUE S.A., F-92366 Meudon la Forêt Cédex (FR)
(72) Inventeur: Thomas, Isabelle, F-26000 Valence (FR); Lefort, Pierre-Olivier, F-26000 Valence (FR)
(74) Mandataire: de Beaumont, Michel

(56) Documents cités:
- EP-A- 0 194 953
- EP-A- 0 467 811
- I.E.E PROCEEDINGS vol. 135, no. 5, 1 Septembre 1988, Stevenage, Herts., GB, pages 369-372; J.C. GREENWOOD et al.: 'Miniature silicon resonant pressure sensor'

## Description

La présente invention concerne un micro-capteur de pression de type capacitif en silicium.

Ces dernières années, se sont développés de nouveaux types de micro-capteurs en silicium, tirant partie des techniques de gravure du silicium développées dans le cadre de la fabrication des composants électroniques à semiconducteurs. Au début, de tels micro-capteurs étaient constitués de l'assemblage de plaquettes de silicium convenablement gravées et de lames minces de verre servant de boîtier étanche ou de plaques de séparation isolantes entre des plaquettes de silicium, ces lames de verre portant éventuellement divers motifs d'électrodes métalliques.

Un exemple d'un tel micro-capteur de pression de l'art antérieur est constitué par le dispositif décrit dans la demande de brevet français 90/09468 (EP-A-467811) au nom de la demanderesse. Dans ce capteur antérieur, les éléments actifs sont constitués à partir de trois plaquettes de silicium mais l'ensemble de la structure est délimité par deux plaquettes externes en verre qui définissent une zone à atmosphère contrôlée.

Un objet de la présente invention est de prévoir une nouvelle structure de micro-capteur de pression plus simple à fabriquer et dont tous les éléments actifs sont constitués par trois plaquettes en silicium définissant également une cavité étanche.

Un autre objet de la présente invention est de prévoir un micro-capteur de pression à capacité parasite réduite.

Un autre objet de la présente invention est de prévoir un micro-capteur de pression à forte sensibilité.

Pour atteindre ces objets ainsi que d'autres, la présente invention prévoit un micro-capteur de pression constitué d'un empilement de trois plaquettes de silicium en contact par leur périphérie avec interposition d'une couche isolante pour définir une cavité interne. La plaquette inférieure comprend une région amincie formant membrane, du côté de sa face interne. La plaquette centrale comprend une région périphérique formant cadre solidaire des plaquettes supérieure et inférieure par l'intermédiaire d'une couche d'oxyde de silicium, un premier plot monté sur la région amincie de la plaquette inférieure, un deuxième plot monté sur une région épaisse de la plaquette inférieure, et une lame de silicium formant résonateur disposée entre les faces supérieures des premier et deuxième plots en regard de la plaquette supérieure. Les plots sont isolés électriquement du cadre. Une première électrode est liée à la plaquette supérieure, une deuxième au cadre et une troisième au deuxième plot.

Selon un mode de réalisation de la présente invention, la troisième électrode est aussi liée à la plaquette inférieure.

Selon un mode de réalisation de la présente invention, le premier plot est situé sensiblement au tiers d'une dimension de la membrane, et le deuxième plot est nettement en retrait par rapport à cette membrane.

Selon un mode de réalisation de la présente invention, la deuxième électrode est reliée à un potentiel de référence.

Selon un mode de réalisation de la présente invention, la plaquette supérieure comprend une région en surépaisseur en regard de la lame formant résonateur.

Selon un mode de réalisation de la présente invention, la liaison électrique vers le deuxième plot est assurée par l'intermédiaire d'une ouverture dans la plaquette inférieure et d'une métallisation. Cette métallisation peut être formée sous vide et obturer ladite cavité.

Ces objets, caractéristiques et avantages ainsi que d'autres de la présente invention seront exposés en détail dans la description suivante de modes de réalisation particuliers faite en relation avec les figures jointes parmi lesquelles :
la figure 1 est une vue en coupe schématique d'un capteur de pression selon la présente invention ;
la figure 2 est un schéma électrique illustrant les diverses capacités d'un capteur selon la présente invention associées à un système de détection ;
la figure 3 illustre un détail de fabrication d'un mode de réalisation de la présente invention ;
la figure 4 est une vue en coupe d'un autre mode de réalisation d'un capteur selon la présente invention ; et
les figures 5A, 5B et 5C sont des vues en coupe et en perspective de trois plaquettes qui, une fois assemblées, constituent un mode de réalisation d'un capteur selon la présente invention.

Dans les diverses figures, les épaisseurs relatives des diverses couches et les dimensions latérales des divers éléments ne sont pas à l'échelle mais ont été tracées arbitrairement pour faciliter la lisibilité des figures et en simplifier le dessin.

Egalement, dans les diverses figures, les faces latérales des diverses plaquettes de silicium ont été représentées comme gravées de façon oblique puisque c'est l'aspect que prennent ces faces latérales quand on a réalisé une gravure anisotrope de silicium selon des plans (1,1,1). Toutefois, on notera d'une part que ceci ne constitue pas une limitation de la présente invention, d'autre part que l'aryle figurant sur les figures est arbitraire. Un exemple d'angle réel serait d'environ 55°.

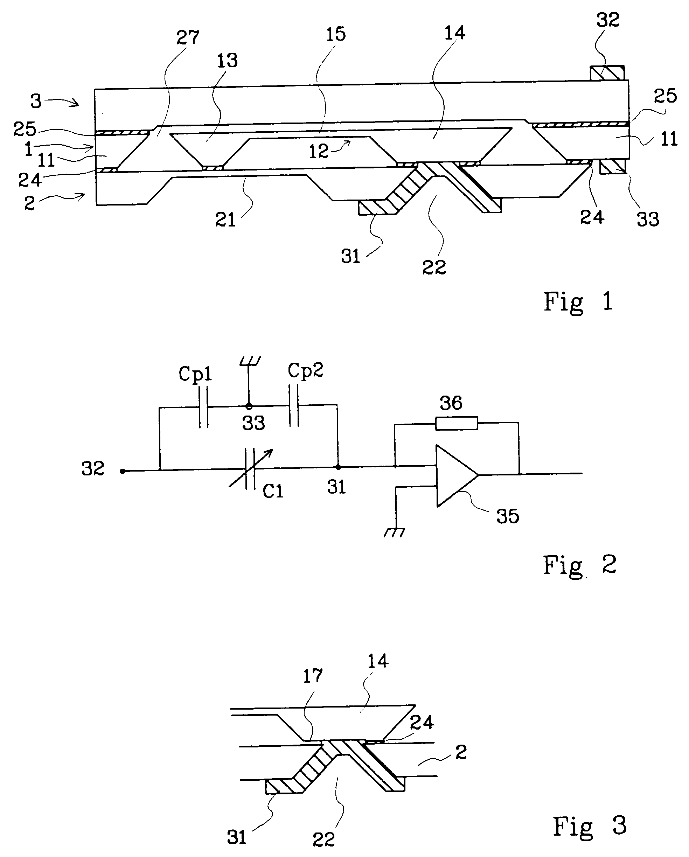

La figure 1 représente une vue en coupe illustrant la structure d'ensemble d'un capteur selon la présente invention. Ce capteur est constitué à partir de trois plaquettes de silicium : une plaquette de silicium centrale 1, une plaquette de silicium inférieure 2 et une plaquette de silicium supérieure 3.

La plaquette de silicium centrale 1 est divisée en deux parties : une partie périphérique 11 formant cadre et une partie centrale 12. La partie centrale comprend un premier plot 13, un deuxième plot 14 et une lame mince 15 reliant ces deux plots. Cette partie centrale est complètement dissociée électriquement de la partie 11 formant cadre. Dans le mode de réalisation illustré, elle en est dissociée électriquement et mécaniquement. On pourrait prévoir un plot 14 mécaniquement solidaire du cadre mais séparé de celui-ci par une région isolante, par exemple une région d'oxyde de silicium traversant toute la plaquette.

La plaquette inférieure 2 comprend une région amincie 21 formant membrane. Cette plaquette inférieure est en contact avec la plaquette centrale par l'intermédiaire d'une couche d'oxyde de silicium 24 disposée entre le cadre de la plaquette centrale et la plaquette inférieure et sous chacun des plots 13 et 14. Le plot 13 repose sur la partie amincie formant membrane 21 et le plot 14 sur une région épaisse de la plaquette 2. Comme cela est indiqué dans la demande de brevet précédemment citée, le plot 13 est de préférence disposé sensiblement au tiers de la longueur de la membrane 21. Si cette membrane 21 est de section rectangulaire, le plot 13, dans sa zone d'appui, prend de préférence une forme allongée, sa région la plus longue s'étendant selon une ligne correspondant au tiers de la membrane.

La plaquette supérieure 3 prend appui sur le cadre 11 de la plaquette centrale 1 et en est séparée par une couche d'oxyde de silicium 25.

Ainsi, l'ensemble des plaquettes supérieure et inférieure définit avec le cadre 11 une cavité 27 à atmosphère contrôlée, de préférence sous vide. Quand la pression externe au capteur varie, la membrane 21 se déforme, le plot 13 tend à s'incliner et la tension de la lame résonante 15 varie, ce qui modifie sa fréquence de résonance.

Une électrode 31 est électriquement reliée à l'ensemble des plots 13 et 14 et de la lame 15. Comme cela est représenté, cette électrode 31 peut être formée dans une ouverture traversant la plaquette 2 pour venir contacter la face inférieure du plot 14. Dans le mode de réalisation représenté, cette électrode 31 est constituée d'une métallisation mettant en contact le plot 14 et la plaquette 2. On pourraît aussi prévoir un isolement entre la métallisation et la plaquette 2. Une électrode 32 est solidaire de la plaquette supérieure 3 et une électrode 33 est solidaire du cadre 11 de la plaquette centrale. La lame 15 et la plaquette supérieure 3 forment un résonateur capacitif à fréquence de résonance variable en fonction de la pression appliquée.

La figure 2 illustre le schéma classique d'un montage de mesure de capacité adapté au capteur selon l'invention. On y trouve entre les électrodes 31 et 32 un condensateur variable C1 correspondant à la capacité constituée par la lame 15 et la plaquette 3. Cette structure est affectée de capacités parasites qui correspondent essentiellement aux capacités entre chacune des plaquettes externes et le cadre. La capacité CP1 a pour diélectrique la couche d'oxyde 25 et la capacité CP2 la couche d'oxyde 24.

De façon classique, la superposition d'une tension continue et d'une tension alternative est appliquée à l'électrode 32 et l'électrode 31 est connectée à la première entrée d'un amplificateur opérationnel 35 dont la deuxième entrée est connectée à un potentiel de référence, couramment la masse. La sortie de l'amplificateur opérationnel 35 est reliée à sa première entrée par l'intermédiaire d'une impédance 36. Ainsi, la première entrée 31 de l'amplificateur opérationnel est à un potentiel flottant correspondant au potentiel de la masse. Selon un aspect de l'invention, on connecte l'électrode 33 au même potentiel de référence, la masse, que la deuxième entrée de l'amplificateur opérationnel 35. Ainsi, l'influence des capacités parasites CP1 et CP2 est éliminée (la capacité CP2 ayant ses deux bornes au même potentiel). Ceci est tout particulièrement important car, en raison de la structure du dispositif, les capacités parasites CP1 et CP2 ont normalement des valeurs bien supérieures à la capacité C1. Par exemple, la capacité C1 aura une valeur de l'ordre de 0,1 pF ± 10%, tandis que les capacités CP1 et CP2 auront des valeurs de l'ordre de 50 pF.

Ainsi, la présente invention permet de s'affranchir de l'influence des capacités parasites. Ceci constitue un avantage d'autant plus important que ces capacités parasites peuvent avoir des valeurs variables en fonction de l'atmosphère ambiante et des paramètres de fabrication.

Dans ce qui précède, il a été indiqué que la partie interne du capteur est une zone à atmosphère réduite. Pour obtenir ce vide, l'homme de l'art pourra utiliser divers procédés. Par exemple, les plaquettes pourront être accolées dans une enceinte vide, ou bien un pompage pourra être réalisé après assemblage des plaquettes. Il est également possible de prévoir un remplissage des plaquettes par un gaz tel que de l'oxygène susceptible d'être, par recuit, absorbé par le silicium.

La figure 3 est une vue en coupe d'un détail de la structure de la figure 1 illustrant une façon particulière d'obtenir le scellement sous vide de la cavité 27. Cette figure représente une partie de la plaquette inférieure 2 et le deuxième plot 14. L'assemblage des plaquettes est effectué de façon que la plaquette 2 comprend une ouverture 22 en regard de la base du plot 14 ; ce plot est monté sur la plaquette par l'intermédiaire d'une couche isolante 24 et un canal 17 est ménagé dans la face inférieure du deuxième plot jusqu'à la région en regard de l'ouverture 2 2. Par ce système, on peut réaliser l'assemblage des plaquettes en atmosphère normale puis, dans une atmosphère choisie, par exemple le vide, déposer le matériau de contact 31 qui vient mettre en court circuit le plot 14 et la plaquette 2, en même temps qu'il obture le canal 17 et assure l'étanchéité de la cavité 27.

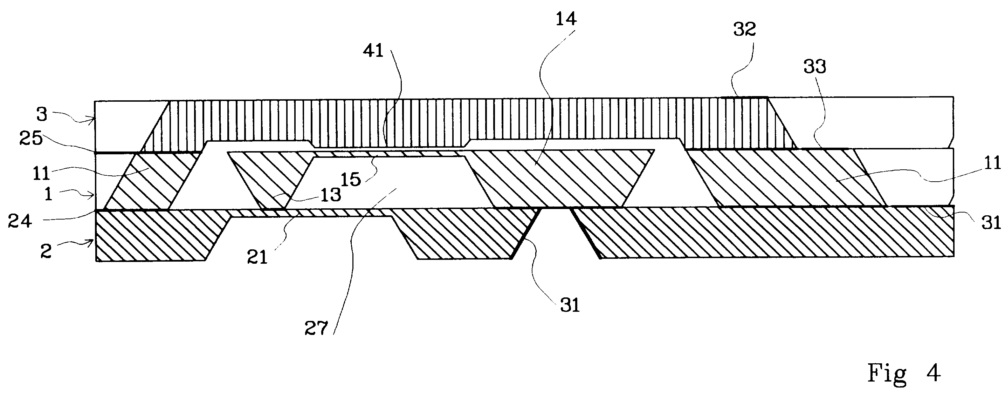

La figure 4 représente une vue en coupe d'un mode de réalisation de la présente invention où l'on retrouve les mêmes éléments que ceux de la figure 1 désignés par les mêmes références. Cette figure illustre plus particulièrement un mode d'accès aux électrodes 31, 32, 33 à travers des découpes formées dans les plaquettes successives. Dans ce mode de réalisation, la région de contact vers le plot 14 est formée sur la plaquette 2 et est électriquement solidaire du plot 14 par l'intermédiaire d'une partie de la plaquette 2 et de la métallisation 31 susmentionnée. La figure 4 montre également que la plaquette supérieure 3 a été gravée avant assemblage pour laisser en relief une région 41 seulement en regard de la lame 15. Cette réalisation permet de réduire les capacités parasites entre les surfaces supérieures des plots 13 et 14 et la surface intérieure de la plaquette 3.

On notera également dans les figures 1 et 4 le fait que le plot 14 ne se trouve pas à la limite de la membrane 21 mais est nettement en retrait par rapport à celle-ci. Ceci est destiné à allonger autant que faire se peut la lame résonante 15 pour améliorer la sensibilité du capteur.

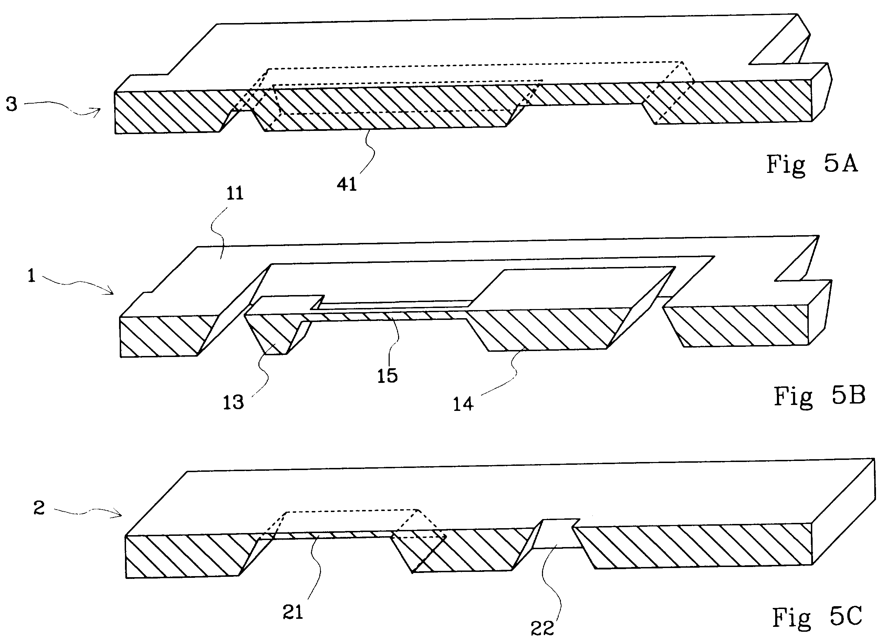

Les figures 5A, 5B et 5C sont des vues en perspective destinées à faire mieux comprendre encore la structure du capteur de pression selon la présente invention. Dans ces figures, les trois plaquettes sont représentées l'une au-dessus de l'autre en perspective et il n'apparaît ni les couches d'oxyde, ni les métallisations. On notera les encoches ménagées du côté droit de la figure sur les plaquettes 1 et 2 et destinées à permettre la prise de contact avec les métallisations des plaquettes inférieures.

Dans un mode de fabrication d'un dispositif selon la présente invention, on préparera initialement les plaquettes 2 et 3 comme cela a été décrit précédemment. Par contre, la plaquette 1 sera préparée de façon à avoir de façon générale la structure décrite précédemment, mais à comprendre en outre des lamelles de silicium minces pour relier mécaniquement le cadre 11 à la partie centrale 13, 14, 15. Ensuite, la plaquette centrale sera posée sur la plaquette inférieure, une soudure silicium/oxyde de silicium sera réalisée, puis une attaque chimique du silicium sera effectuée pour éliminer les lamelles de liaison. Bien entendu, les diverses épaisseurs auront été préalablement déterminées pour assurer que cette dernière gravure laisse en place des épaisseurs prédéterminées pour les divers éléments actifs.

L'homme de l'art notera que la présente invention est susceptible de diverses variantes et modifications. Par exemple, après assemblage des trois plaquettes, la surface externe des plaquettes externes pourra être oxydée et revêtue d'une couche métallique formant blindage, pouvant être reliée à la masse pour protéger le dispositif contre des surtensions parasites.

On a décrit et représenté schématiquement ci-dessus la fabrication d'un micro-capteur selon la présente invention. Il apparaîtra clairement à l'homme de l'art qu'en pratique cette fabrication résulte d'un procédé collectif, chaque plaquette faisant initialement partie d'une plaque de plus grande dimension, la séparation en capteurs individuels se faisant après les opérations finales d'assemblage et éventuellement de formation de contact.

A titre d'exemple d'ordre de grandeur, un dispositif particulier pourra avoir les dimensions suivantes :
- dimension des plaquettes : 8 x 5 mm,
- distance de la lame 15 à la plaquette 3 : 10 micromètres,
- dimensions à la base du plot 13 : 0,2 x 0,6 mm,
- épaisseur de la membrane 21 : 15 micromètres,
- dimensions latérales de la membrane : 1,6 x 1,6 mm.

## Revendications

1. Micro-capteur de pression constitué d'un empilement de trois plaquettes de silicium en contact par leur périphérie avec interposition d'une couche isolante pour définir une cavité interne, caractérisé en ce que :
la plaquette inférieure (2) comprend une région amincie (21) formant membrane, du côté de sa face interne,
la plaquette centrale (1) comprend une région périphérique (11) formant cadre solidaire des plaquettes supérieure et inférieure par l'intermédiaire d'une couche d'oxyde de silicium (24, 25), un premier plot (13) monté sur la région amincie de la plaquette inférieure, un deuxième plot (14) monté sur une région épaisse de la plaquette inférieure, et une lame de silicium (15) formant résonateur disposée entre les faces supérieures des premier et deuxième plots en regard de la plaquette supérieure (3), les plots étant isolés électriquement du cadre,
et en ce qu'il comprend une première électrode (32) liée à la plaquette supérieure, une deuxième électrode (33) liée au cadre et une troisième électrode (31) liée au deuxième plot.

2. Micro-capteur de pression selon la revendication 1, caractérisé en ce que la troisième électrode est également liée à la plaquette inférieure.

3. Micro-capteur de pression selon la revendication 1, caractérisé en ce que le premier plot est situé sensiblement au tiers d'une dimension de la membrane, et en ce que le deuxième plot est nettement en retrait par rapport à cette membrane.

4. Micro-capteur de pression selon la revendication 1, caractérisé en ce que la deuxième électrode est reliée à un potentiel de référence.

5. Micro-capteur de pression selon la revendication 1, caractérisé en ce que la plaquette supérieure (3) comprend une région en surépaisseur (41) en regard de la lame formant résonateur (15).

6. Micro-capteur de pression selon la revendication 1, caractérisé en ce que la liaison électrique vers le deuxième plot est assurée par l'intermédiaire d'une ouverture dans la plaquette inférieure et d'une métallisation.

7. Micro-capteur de pression selon la revendication 6, caractérisé en ce que ladite métallisation est formée sous vide et obture ladite cavité.

## Claims

1. A pressure micro-sensor formed by a sandwich of three silicon plates in contact by their periphery, with an interposed insulating layer in order to define an internal cavity, characterized in that:
the lower plate (2) includes a thinner region (21) forming a diaphragm, on its internal side,
the intermediate plate (1) includes a peripheral region (11) forming a frame coupled to the upper and lower plates by a silicon oxide layer (24, 25), a first stud (13) mounted onto the thinner region of said lower plate, a second stud (14) mounted onto a thick region of said lower plate, and a silicon beam (15) forming a resonator, said silicon beam being disposed between the upper surfaces of said first and second studs in front of the upper plate (3), the studs being electrically insulated from the frame,
and in that it comprises a first electrode (32) connected to said upper plate, a second electrode (33) connected to the frame and a third electrode (31) connected to the second stud.

2. The pressure micro-sensor of claim 1, characterized in that the third electrode is also connected to the lower plate.

3. The pressure micro-sensor of claim 1, characterized in that the first stud is disposed at a position approximately corresponding to one third of the diaphragm, and the second stud is distant from said diaphragm.

4. The pressure micro-sensor of claim 1, characterized in that the second electrode is connected to a reference voltage.

5. The pressure micro-sensor of claim 1, characterized in that the upper plate (3) includes a thicker region (41) in register with the resonator beam (15).

6. The pressure micro-sensor of claim 1, characterized in that the electrical connection to the second stud is ensured through an aperture in the lower plate and a metallization.

7. The pressure micro-sensor of claim 6, characterized in that the metallization is formed under a vacuum and obturates the cavity.

## Patentansprüche

1. Ein Druck-Mikrosensor gebildet durch eine Sandwichanordnung aus drei Siliziumplättchen oder -platten, die durch ihren Umfang in Kontakt stehen und mit einer dazwischen angeordneten Isolierschicht zur Definition eines Innenhohlraums, dadurch gekennzeichnet,
daß die untere Platte (2) auf ihrer Innenseite eine dünnere, eine Membran bildende Region (21) aufweist, daß die Mittelplatte (1) folgendes aufweist: eine Umfangsregion (11), die einen Rahmen bildet, der mit oberen und unteren Platten durch eine Siliziumoxydschicht (24, 25) gekuppelt ist, einen ersten Stummel oder Anschluß (13) angebracht an der dünneren Region der erwähnten unteren Platte, einen zweiten Stummel oder Anschluß (14) angebracht an einer dicken Region der unteren Platte und einen Siliziumträger (15), der einen Resonator bildet und der zwischen den Oberseiten der ersten und zweiten Stummel vor der oberen Platte (3) angeordnet ist, wobei die Stummel elektrisch vom Rahmen isoliert sind, und
daß eine erste Elektrode (32) mit der oberen Platte, eine zweite Elektrode (33) mit dem Rahmen und eine dritte Elektrode (31) mit dem zweiten Stummel verbunden ist.

2. Druck-Mikrosensor nach Anspruch 1, dadurch gekennzeichnet, daß die dritte Elektrode ebenfalls mit der unteren Platte verbunden ist.

3. Druck-Mikrosensor nach Anspruch 1, dadurch gekennzeichnet, daß der erste Stummel an einer Position angeordnet ist, die annähernd einem Drittel einer Dimension der Membran entspricht, und daß der zweite Stummel gegenüber der Membran beabstandet angeordnet ist.

4. Druck-Mikrosensor nach Anspruch 1, dadurch gekennzeichnet, daß die zweite Elektrode mit einer Bezugsspannung verbunden ist.

5. Druck-Mikrosensor nach Anspruch 1, dadurch gekennzeichnet, daß die obere Platte (3) eine dickere Region (41) in in Ausrichtung mit der im Resonatorträger (15) aufweist.

6. Druck-Mikrosensor nach Anspruch 1, dadurch gekennzeichnet, daß die elektrische Verbindung zum zweiten Stummel durch eine Öffnung in der unteren Platte und eine Metallisierung sichergestellt ist.

7. Druck-Mikrosensor nach Anspruch 6, dadurch gekennzeichnet, daß die Metallisierung unter einem Vakuum geformt ist und den Hohlraum abdeckt.
